Europäisches Patentamt

European Patent Office

Office européen des brevets

(11) Numéro de publication : **0 008 477**
**B1**

(12)

# FASCICULE DE BREVET EUROPÉEN

(45) Date de publication du fascicule du brevet :
07.04.82

(51) Int. Cl.³ : **E 21 B  3/02**

(21) Numéro de dépôt : **79200446.7**

(22) Date de dépôt : **13.08.79**

(54) **Mandrin d'entraînement d'une tige de forage.**

(30) Priorité : 25.08.78 BE 190067

(43) Date de publication de la demande :
05.03.80 (Bulletin 80/05)

(45) Mention de la délivrance du brevet :
07.04.82 Bulletin 82/14

(84) Etats contractants désignés :
AT CH DE FR GB IT LU NL SE

(56) Documents cités :
AU - B - 410 508
FR - A - 2 019 899
GB - A - 865 879
US - A - 2 090 854
US - A - 2 570 306
US - A - 3 212 591
US - A - 3 272 266
US - A - 3 579 752

(73) Titulaire : **DIAMANT BOART Société anonyme**
**Avenue du Pont de Luttre, 74**
**B-1190 Bruxelles (BE)**

(72) Inventeur : **Lambot, Honoré Joseph**
**16, rue Van Volxem**
**B-1430 Wauthier-Braine (BE)**

(74) Mandataire : **Desmecht, Roger et al**
**Bureau VANDER HAEGHEN 63 Avenue de la Toison**
**d'Or**
**B-1060 Bruxelles (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

## Mandrin d'entraînement d'une tige de forage

La présente invention est relative à un mandrin d'entraînement d'une tige de forage.

En substance, le mandrin d'entraînement comprend un élément tubulaire destiné à entourer coaxialement la tige de forage. L'élément tubulaire tourne autour de son axe sous l'action du moteur de commande de la rotation de la tige de forage. L'élément tubulaire présente des ouvertures de passage de plusieurs mors de prise de la tige de forage. Les mors sont rotatifs conjointement à l'élément tubulaire et applicables radialement contre la tige de forage, sous la poussée de coins sollicités vers le haut par des ressorts. Les coins tournent aussi conjointement à l'élément tubulaire et coulissent axialement vers le bas sous le contrôle d'une poussée hydraulique à l'encontre des ressorts.

Dans des mandrins connus de ce genre, les mors sont montés sur une couronne logée dans un cylindre hydraulique capable de produire la poussée susdite. En service, le cylindre hydraulique traversé par la tige de forage est rotatif autour de celle-ci. Le corps du cylindre hydraulique présente intérieurement des faces inclinées contre lesquelles les mors sont guidés dans leur coulissement axial. D'autre part, le piston du cylindre hydraulique est applicable sur la face supérieure des mors pour assurer leur déplacement axial vers le bas, à l'encontre de rondelles à ressort superposées et enfilées le long d'une tige s'étendant entre ce piston et une embase de la couronne. Par ailleurs, l'alimentation du cylindre hydraulique en fluide sous pression est prévue à la partie supérieure de ce cylindre au-dessus du piston.

Les mandrins d'entraînement connus présentent des inconvénients. Ces mandrins n'offrent aucune possibilité de réglage de la position initiale des mors en fonction de la tige de forage. Plus précisément, ces mêmes mandrins ne permettent pas de régler la position initiale des mors par rapport à la tige de forage. Il en résulte que l'utilisateur du carottier de forage doit démonter les mors pour laisser passer le carottier et la couronne et qu'il n'y a aucune possibilité de compenser l'usure de ces mors.

Il existe également des mandrins analogues exclusivement mécaniques. Dans ces autres mandrins connus, les mors sont montés sur une couronne disposée dans un carter. En service, la couronne traversée par la tige de forage, tourne aussi avec celle-ci. Cette couronne présente elle-même les coins mobiles assurant le déplacement radial des mors sous l'action de vérins mécaniques incorporés au carter et développant une poussée mécanique et non plus hydraulique.

Les autres mandrins mécaniques connus particulièrement encombrants et compliqués n'ont aussi aucune possibilité de réglage de la position initiale des mors par rapport à la tige de forage. En outre, ces mandrins exigent des temps de manœuvre importants.

L'objet de l'invention actuelle est un nouveau mandrin d'entraînement qui permet de remédier aux inconvénients précités des cas connus.

A cet effet, dans le mandrin selon l'invention, les coins font partie d'une couronne filetée extérieurement et présentant des ouvertures de passage des ressorts. Ces ressorts reposent inférieurement contre une collerette de l'élément tubulaire. La couronne est vissée axialement d'une manière réglable dans un manchon cylindrique taraudé qui est disposé au-dessus de la collerette. Le manchon est accroché supérieurement à un plateau inférieur annulaire monté sur l'élément tubulaire. L'ensemble de la couronne, du manchon et du plateau inférieur tourne conjointement à l'élément tubulaire en dessous d'un plateau supérieur annulaire non rotatif. Ce plateau supérieur est placé autour de l'élément tubulaire, par l'intermédiaire d'une couronne à billes montée entre les deux plateaux. L'ensemble de la couronne, du manchon, des deux plateaux et de la couronne à billes coulisse axialement vers le haut à l'aide des ressorts. Ces ressorts prennent appui supérieurement, comme les coins, contre le plateau annulaire inférieur. Cet ensemble coulisse vers le bas à l'encontre de ces ressorts, sous l'effet de la poussée hydraulique appliquée au plateau supérieur non rotatif et transmise aux coins par la couronne à billes et le plateau inférieur.

Pour améliorer l'étanchéité du manchon et de la collerette de l'élément tubulaire du nouveau mandrin, le bord inférieur de ce manchon est déplaçable axialement dans une rainure correspondante de cette collerette.

Selon une caractéristique simplifiant la réalisation du nouveau mandrin, le plateau inférieur est prolongé vers le haut par une bague autour de laquelle sont montés la couronne à billes et le plateau supérieur, lesquels y sont retenus par un circlips ou analogue porté par cette bague.

Afin de faciliter le glissement des mors contre les coins du nouveau mandrin, chaque mors prend appui contre le coin correspondant par l'intermédiaire d'une plaquette à aiguilles. De préférence, la plaquette à aiguilles est montée sur le coin au moyen d'un ressort à lame fixé à la grande base de ce coin se trouvant du côté opposé au moteur de commande.

Les mandrins hydrauliques connus maintiennent les mors serrés contre la tige sous l'effet de pression hydraulique. Il en résulte qu'en cas de perte de pression la tige est lâchée et peut alors glisser dans le mandrin, ce qui peut constituer un danger très grave. D'autre part, cela nécessite une butée à billes de grand diamètre qui reste constamment sous forte contrainte puisque le cylindre non tournant doit transmettre la poussée hydraulique au mandrin tournant.

Le nouveau mandrin permet de remédier efficacement à ces désavantages des cas connus et dans ce but, la poussée hydraulique de dégagement des mors de la tige de forage est exercée par plusieurs vérins hydrauliques fixes repoussant vers le bas le plateau et ainsi les coins à l'encontre des ressorts.

Selon une caractéristique constructive du nouveau mandrin, les vérins hydrauliques sont montés sur le carter fixe des moyens de transmission de la puissance de rotation de la tige de forage, avec leur tige de piston prenant appui contre le plateau supérieur susdit.

D'autres détails et particularités de l'invention apparaîtront au cours de la description et des dessins annexés au présent mémoire qui représentent schématiquement et à titre d'exemple seulement une forme de réalisation de l'invention.

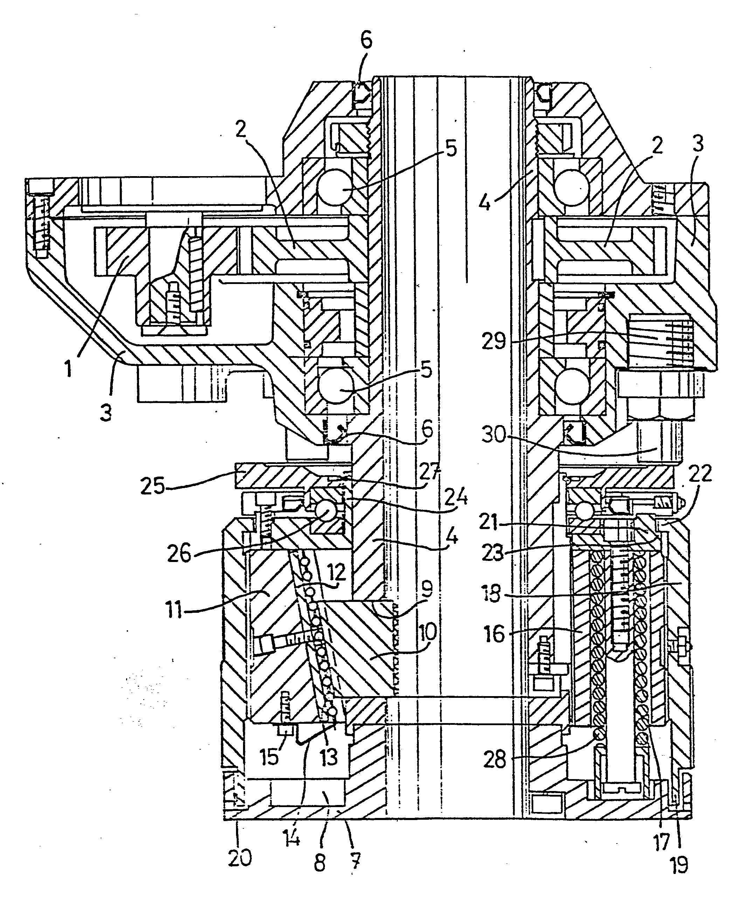

La figure unique est une coupe verticale partielle d'une forme d'exécution d'un nouveau mandrin d'entraînement.

Le mandrin représenté sert à assurer la rotation d'une tige de forage autour de son axe longitudinal.

La tige de forage est mise en rotation sous l'action d'un moteur de commande hydraulique. Sur l'arbre de sortie du moteur de commande est calé un pignon denté 1 engrenant avec une roue dentée 2 tournant à l'intérieur d'un carter 3. La roue dentée 2 est calée à son tour sur un élément tubulaire 4 qui est rotatif dans le carter 3 grâce à des roulements à billes 5 et qui dépasse sensiblement ce carter 3 vers le bas. Des anneaux d'étanchéité 6 sont prévus haut et bas dans les parois du carter 3 autour de l'élément tubulaire 4.

L'extrémité inférieure de l'élément tubulaire 4 comporte une collerette 7 qui présente des évidements 8 dirigés vers le haut et répartis régulièrement.

En service, l'élément tubulaire 4 est traversé coaxialement par la tige de forage et tourne sous l'action du moteur sans coulisser axialement.

Au-dessus de la collerette 7, l'élément tubulaire 4 présente des ouvertures 9 pour le passage de mors 10 capables de serrer radialement la tige de forage. Les mors 10 tournent conjointement à l'élément tubulaire 4 et entraînent en rotation la tige de forage lorsqu'ils sont serrés contre elle. De préférence, trois mors 10 sont disposés et répartis régulièrement autour de l'axe de l'élément tubulaire 4.

Chaque mors 10 est déplaçable radialement à travers l'ouverture 9. A cet effet, chaque mors 10 coopère avec un coin 11 mobile axialement au-dessus de la collerette 7. Comme le mors 10, le coin 11 tourne conjointement à l'élément tubulaire 4.

Chaque mors 10 présente une face inclinée externe, tandis que le coin 11 a une face interne parallèle à cette face externe. La face inclinée du coin 11 est garnie d'un patin de recouvrement 12. Entre les faces susdites est disposée une plaquette à aiguilles 13 qui constitue l'élément mécanique intermédiaire par lequel le mors 10 prend appui contre le coin 11. La plaquette à aiguilles 13 est montée sur le coin 11 au moyen d'un ressort à lame 14 fixé par des boulons 15 à la grande base inférieure de ce coin 11.

Les coins 11 font partie d'une couronne annulaire 16 qui est filetée extérieurement et qui présente des ouvertures verticales 17 régulièrement réparties. La couronne 16 est vissée axialement d'une manière réglable dans un manchon cylindrique 18 taraudé sur une grande partie de sa hauteur. Le manchon 18 est disposé au-dessus de la collerette 7 et son bord inférieur 19 est engagé constamment dans une rainure circulaire 20 de cette collerette 7 en pouvant y coulisser axialement ou verticalement.

Le manchon 18 est accroché supérieurement à un plateau inférieur annulaire 21 et à cet effet, son bord supérieur présente un rebord interne 22 pouvant coopérer avec un épaulement circulaire 23 de ce plateau inférieur 21. Le plateau inférieur 21 est prolongé vers le haut par une bague 24 qui fait corps avec lui. Le plateau inférieur 21 avec sa bague 24 est calé sur l'élément tubulaire 4 et tourne avec ce dernier mais peut coulisser axialement.

L'ensemble de la couronne 16, du manchon 18 et du plateau inférieur 21 tourne conjointement à l'élément tubulaire 4 en dessous d'un plateau supérieur annulaire 25 immobilisable et pouvant être non rotatif, grâce à une couronne à billes 26 disposée entre ces deux plateaux 21 et 25. La couronne à billes 26 et le plateau supérieur 25 sont montés autour de la bague 24 et y sont retenus axialement par rapport au plateau inférieur 21 par un circlip 27 ou analogue porté par la partie supérieure de cette bague 24.

L'ensemble de la couronne 16, du manchon 18, des deux plateaux 21 et 25 et de la couronne à billes 26 coulisse axialement vers le haut pour assurer le serrage radial de la tige de forage par les mors 10. Ce coulissement vers le haut est obtenu par des ressorts hélicoïdaux 28 disposés respectivement dans les ouvertures verticales 17 de la couronne 16. Les ressorts 28 prennent appui inférieurement contre la collerette 7 de l'élément tubulaire 4 et à cet effet, leurs extrémités inférieures reposent sur le fond des évidements 8 dans lesquels elles sont logées. En outre, les ressorts 28 prennent appui supérieurement contre le plateau inférieur 21. D'autre part, les coins 11 prennent appui contre le plateau supérieur 21 par l'intermédiaire du manchon 18. De la sorte, les ressorts 28 précomprimés au montage entre le plateau inférieur 21 et la collerette 7 sollicitent élastiquement le dernier ensemble susdit vers le haut et déplacent donc les coins 11 également vers le haut pour forcer les mors 10 à être déplacés radialement vers l'axe de l'élément tubulaire 4 et à être appliqués et serrés suffisamment contre la tige de forage.

L'ensemble de la couronne 16, du manchon 18, des deux plateaux 21 et 25 et de la couronne à billes 26 coulisse axialement vers le bas à l'encontre des ressorts 28 pour assurer le desserrage radial de la tige de forage par les mors 10. Ce coulissement vers le bas est produit par plusieurs vérins hydrauliques fixes 29 qui exercent des poussées hydrauliques dirigées vers le bas. Dans le cas considéré, les tiges de piston 30 des vérins hydrauliques 29 sont appliquées contre le plateau supérieur 25 et repoussent celui-ci vers le bas ainsi qu'avec lui, le dernier ensemble précité. De la sorte, lors de l'actionnement simultané des vérins hydrauliques 29, les coins 11 sont refoulés vers le bas. Il en résulte alors que les mors 10 ne serrent plus la tige de forage devenue libre du moteur de commande.

Les corps des vérins hydrauliques 29 sont solidarisés au carter fixe 3 des moyens de transmission de la puissance de rotation de la tige de forage.

Ainsi, le mandrin d'entraînement décrit peut être mécaniquement peu compliqué et peu encombrant. De plus, ce mandrin est facilement démontable et ses constituants sont aisément accessibles. En outre, ses organes hydrauliques ne sont pas renfermés dans un boîtier.

Pour entraîner la tige de forage, on actionne d'abord le mandrin d'actionnement de façon à assurer l'application et le serrage des mors 10 sur cette tige de forage. A cet effet, on agit sur les vérins hydrauliques 29 de façon à remonter simultanément leurs tiges de piston 30 ainsi que les coins 11. Ensuite, on met en marche le moteur 1. Pour désentraîner la tige de forage, on agit inversement.

## Revendications

1. Mandrin d'entraînement d'une tige de forage, comprenant un élément tubulaire (4) destiné à entourer coaxialement la tige de forage et tournant autour de son axe sous l'action du moteur de commande de la rotation de cette tige de forage, l'élément tubulaire (4) présentant des ouvertures (9) de passage de plusieurs mors (10) rotatifs conjointement à cet élément tubulaire (4) et applicables radialement contre la tige de forage sous la poussée de coins (11) sollicités vers le haut par des ressorts (28), ces coins (11) tournant aussi conjointement à l'élément tubulaire (4) et coulissant axialement vers le bas sous le contrôle d'une poussée hydraulique à l'encontre des ressorts (28), caractérisé en ce que les coins (11) font partie d'une couronne (16) filetée extérieurement et présentant des ouvertures (17) de passage des ressorts (28), lesquels reposent inférieurement contre une collerette (7) de l'élément tubulaire (4), la couronne (16) étant vissée axialement d'une manière réglable dans un manchon cylindrique (18) taraudé qui est disposé au-dessus de la collerette (7) et accroché supérieurement à un plateau inférieur annulaire (21) monté sur l'élément tubulaire (4), l'ensemble de la couronne (16), du manchon (18) et du plateau inférieur (21) tournant conjointement à l'élément tubulaire (4) en dessous d'un plateau supérieur annulaire (25) immobilisable placé autour de l'élément tubulaire (4), par l'intermédiaire d'une couronne à billes (26) montée entre ces deux plateaux (21) et (25), l'ensemble de la couronne (16), du manchon (18), des deux plateaux (21) et (25) et de la couronne à billes (26) coulissant axialement vers le haut à l'aide des ressorts (28) qui prennent appui supérieurement, comme les coins (11), contre le plateau annulaire inférieur (21), et vers le bas à l'encontre de ces ressorts (28), sous l'effet de la poussée hydraulique appliquée au plateau supérieur (25) non rotatif et transmise aux coins (11) par la couronne à billes (26) et le plateau inférieur (21).

2. Mandrin d'entraînement selon la revendication 1, caractérisé en ce que le bord inférieur (19) du manchon (18) est déplaçable axialement dans une rainure correspondante (20) de la collerette (7) de l'élément tubulaire (4).

3. Mandrin d'entraînement selon la revendication 1 ou 2, caractérisé en ce que le plateau inférieur (21) est prolongé vers le haut par une bague (24) autour de laquelle sont montés la couronne à billes (26) et le plateau supérieur (25), lesquels y sont retenus par un circlip (27) ou analogue porté par cette bague (24).

4. Mandrin d'entraînement selon l'une ou l'autre des revendications 1 à 3, caractérisé en ce que chaque mors (10) prend appui contre le coin (11) correspondant par l'intermédiaire d'une plaquette à aiguilles (13).

5. Mandrin d'entraînement selon la revendication 4, caractérisé en ce que la plaquette à aiguilles (13) est montée sur le coin (11) au moyen d'un ressort à lame (14) fixé à la grande base de ce coin (11) se trouvant du côté opposé au moteur de commande.

6. Mandrin d'entraînement selon l'une ou l'autre des revendications 1 à 5, caractérisé en ce que la poussée hydraulique de dégagement des mors (10) de la tige de forage est exercée par plusieurs vérins hydrauliques fixes (29) repoussant vers le bas le plateau supérieur (25) et ainsi les coins (11) à l'encontre des ressorts (28) précités.

7. Mandrin d'entraînement selon la revendication 6, caractérisé en ce que les vérins hydrauliques (29) sont montés sur le carter (3) fixe des moyens de transmission de la puissance de rotation de la tige de forage, avec leur tige de piston (30) prenant appui contre le plateau supérieur (25) susdit.

## Claims

1. A chuck for driving a boring bar, comprising a tubular member (4) which is intended coaxially to surround the boring bar and which is rotated about its axis by the motor for producing rotary movement of the boring bar, the tubular member (4) having openings (9) for receiving a plurality of jaws (10) which are rotatable jointly with said tubular member (4) and which can be applied radially against the boring bar under the thrust force of wedge members (11) which are urged upwardly by springs (28), said wedge members (11) thus rotating jointly with the tubular member (4) and sliding axially downwardly under the control of a hydraulic thrust force against the springs (28), characterised in that the wedge members (11) are part of an externally threaded ring (16), having openings (17) for the springs (28) which rest at their lower end against a collar (7) on the tubular member (4), the ring (16) being axially screwed adjustably in a cylindrical screw-threaded sleeve (18) which is disposed above the collar (7) and hooked in its upper part to an annular lower plate (21) mounted on the tubular member (4), the assembly of the ring (16), the sleeve (18) and the lower plate (21) rotating jointly with the tubular member (4) below an upper annular plate (25) which can be immobilised and which is disposed around the tubular member (4), by way of a ball race (26) which is mounted between said two plates (21) and (25), the assembly of the ring (16), the sleeve (18), the two plates (21) and (25) and the ball race (26) sliding axially upwardly by means of the springs (28) which at their upper end, like the wedge members (11), bear against the lower annular plate (21), and downwardly against the springs (28), under the effect of the hydraulic thrust force which is applied to the non-rotatable upper plate (25) and which is transmitted to the wedge members (11) by the ball race (26) and the lower plate (21).

2. A chuck according to claim 1 characterised in that the lower edge (19) of the sleeve (18) is displaceable axially in a corresponding groove (20) in the collar (7) of the tubular member (4).

3. A chuck according to claim 1 or claim 2 characterised in that the lower plate (21) is extended upwardly by a ring (24) around which are mounted the ball race (26) and the upper plate (25) which are retained thereat by a circlip (27) or the like carried by said ring (24).

4. A chuck according to any one of claims 1 to 3 characterised in that each jaw (10) bears against the corresponding wedge member (11) by way of a planar needle bearing assembly (13).

5. A chuck according to claim 4 characterised in that the bearing assembly (13) is mounted on the wedge member (11) by means of a blade spring (14) which is fixed to the large base of the wedge member (11) which is at the opposite side to the actuating motor.

6. A chuck according to any one of claims 1 to 5 characterised in that the hydraulic thrust force for disengaging the jaws (10) from the boring bar is applied by a plurality of fixed hydraulic jacks (29) which urge the upper plate (25) and thus the wedge members (11) downwardly against said springs (28).

7. A chuck according to claim 6 characterised in that the hydraulic jacks (29) are mounted on the fixed casing (3) of the means for transmitting the power for rotation of the boring bar, with their piston rod (30) bearing against said upper plate (25).

**Ansprüche**

1. Antriebsfutter für ein Bohrgestänge mit einem rohrförmigen Element (4), welches dazu bestimmt ist, das Bohrgestänge gleichachsig zu umgeben und sich um seine Achse unter der Wirkung des Antriebsmotors für die Drehung des Bohrgestänges zu drehen, welches rohrförmige Element (4) mit Öffnungen (9) für den Durchtritt mehrerer Spannbacken (10) versehen ist, die zusammen mit dem rohrförmigen Element (4) drehbar sind und radial gegen das Bohrgestänge unter dem Schub von Keilen 11 zur Anlage gebracht werden können, welche durch Federn (28) nach oben belastet sind, welche Keile (11) sich ebenfalls gemeinsam mit dem rohrförmigen Element (4) drehen und axial nach unten unter der Steuerung eines hydraulischen Druckes entgegen den Federn (28) gleiten, dadurch gekennzeichnet, daß die Keile (11) einen Teil eines Kranzes (16) bilden, der mit einem Außengewinde versehen ist und Öffnungen (17) für den Durchtritt der Federn (28) aufweist, welche sich unten gegen einen Bördelflansch (7) des rohrförmigen Elements (4) abstützen, wobei der Kranz (16) axial in regelbarer Weise in eine zylindrische mit einem Gewinde versehene Hülse (18) eingeschraubt ist, welche über dem Bördelflansch (7) angeordnet und oben mit einer ringförmigen unteren Platte (21) verankert ist, die auf dem rohrförmigen Element (4) angeordnet ist, wobei die Baugruppe aus dem Kranz (16), der Hülse (18) und der unteren Platte (21) sich gemeinsam mit dem rohrförmigen Element (4) unterhalb einer oberen ringförmigen Platte (25) dreht, die feststellbar ist und um das rohrförmige Element (4) herum mittels eines Kugelkranzes (26) angeordnet ist, der zwischen den beiden Platten (21 and 25) angeordnet ist, wobei die Baugruppe aus dem Kranz (16) der Hülse (18), der beiden Platten (21 u. 25) und dem Kugelkranz (26) axial nach oben unter der Wirkung der Federn (28) gleitet, die sich oben wie die Keile (11) gegen die untere ringförmige Platte (21) abstützen und nach unten entgegen den Federn (28) unter der Wirkung des hydraulischen Schubes, der auf die nicht drehbare obere Platte (25) ausgeübt und auf die Keile (11) durch den Kugelkranz (26) und die untere Platte (21) übertragen wird.

2. Antriebsfutter nach Anspruch 1, dadurch gekennzeichnet, daß der untere Rand (19) der Hülse (18) in einer entsprechenden Nut (20) des Bördelflansches (7) des rohrförmigen Elements (4) axial verlagerbar ist.

3. Antriebsfutter nach Anspruch 1 oder 2, dadurch gekennzeichnet, daß die untere Platte (21) nach oben durch einen Ring (24) verlängert ist, um welchen herum der Kugelkranz (26) und die obere Platte (25) angeordnet sind, welche durch einen Sprengring (27) od. dgl., der von dem Ring (24) getragen wird, dort gehalten werden.

4. Antriebsfutter nach einem oder mehreren der Ansprüche 1 bis 3, dadurch gekennzeichnet, daß sich jede Spannbacke (10) gegen den entsprechenden Keil (11) mittels einer Nadelplakette (13) abstützt.

5. Antriebsfutter nach Anspruch 4, dadurch gekennzeichnet, daß die Nadelplakette (13) auf dem Keil (11) mittels einer Blattfeder (14) angeordnet ist, die an der grossen Basis des Keils (11) befestigt ist, die sich auf der dem Antriebsmotor entgegengesetzten Seite befindet.

6. Antriebsfutter nach einem oder mehreren der Ansprüche 1 bis 5, dadurch gekennzeichnet, daß der hydraulische Schub zur Lösung der Spannbacken (10) von dem Bohrgestänge durch mehrere feste Hydrozylinder (29) ausgeübt wird, welche die obere Platte (25) und damit die Keile (11) entgegen der Wirkung der erwähnten Federn (28) nach unten zurückdrücken.

7. Antriebsfutter nach Anspruch 6, dadurch gekennzeichnet, daß die Hydrozylinder (29) auf dem festen Gehäuse (3) des Getriebes für den Drehantrieb des Bohrgestänges angeordnet sind, wobei ihre Kolbenstange (30) sich gegen die erwähnte obere Platte (25) abstützt.